# EUROPEAN PATENT SPECIFICATION

(11) **EP 2 061 244 B1**
(45) Date of publication and mention of the grant of the patent: **23.04.2014**
(21) Application number: 08164940.2
(22) Date of filing: 23.09.2008
(51) Int. Cl.: H04N 21/266, H04N 21/418, H04N 21/6334, H04N 21/643, H04L 29/06, H04N 7/167

(54) **Protection of broadcast content with key distribution using telecommunications network**
Schutz von Rundfunkinhalten mit Schlüsselverteilung über ein Telekommunikationsnetzwerk
Protection de contenu de diffusion avec distribution de clés à travers un réseau de telecommunication

(30) Priority: 27.09.2007 GB 0718826
(43) Date of publication of application: 20.05.2009
(73) Proprietor: Vodafone Group PLC, Newbury Berkshire RG14 2FN (GB)
(72) Inventor: Wright, Timothy, Reading, Berkshire RG30 2PE (GB); Priestley, Mark, Kew, Surrey TW9 4BG (GB)
(74) Representative: Boult Wade Tennant

(56) References cited:
- EP-A- 1 826 931
- US-A1- 2002 034 301
- US-A1- 2006 229 992
- WRIGHT ET AL: "Security considerations for broadcast systems" INFORMATION SECURITY TECHNICAL REPORT, ELSEVIER ADVANCED TECHNOLOGY, vol. 11, no. 3, 1 January 2006 (2006-01-01), pages 137-146, XP025173945 ISSN: 1363-4127 [retrieved on 2006-01-01]
- SIEMENS: "N to N relationship between User Services and Transport Services1" 3GPP DRAFT; S3-040489_MBMS_USER_TRANSPORT_RELATIONV2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_sa\WG3_Security\TSGS3_34_Acapulco\Docs \ZIP, no. Acapulco; 20040706, 29 June 2004 (2004-06-29), XP050275992
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 December 1995 (1995-12-21), pages 64-77, XP000559450 ISSN: 0251-0936
- 'Pretty Good Privacy', [Online] 22 September 2007, Wikipedia Retrieved from the Internet: <URL:http://en.wikipedia.org/w/index.php?ti tle=Pretty_Good_Privacy&oldid=159596260> [retrieved on 2012-01-31]

## Description

The present invention relates to a method of controlling the use, by a user terminal registered with a telecommunications network, of content broadcast by broadcasting means and encrypted by a key. The present invention also relates to apparatus for controlling use of broadcast content.

Mobile TV broadcast over a broadcast bearer (e.g. DVB-H) has security issues which are not present when the same content is delivered over a point-to-point bearer (e.g. streamed over a 3G network). Over a broadcast bearer the content is broadcast and so can in principle be received by anyone with the right type of receiver. However, to be able to charge for the broadcast content the service provider needs to be able to control who can and cannot access the services. This is typically achieved by encrypting the broadcast content and providing mechanisms for legitimate subscribers to obtain the keys necessary to decrypt that content. The generic term for these mechanisms and the channel encryption is service protection. There are a number of standardised service protection solutions.

Generally service protection uses a hierarchy of keys in which each layer of keys is used to protect the content or keys in the layer below. In this document the terms "encrypt" and "encrypted" are used to mean that a key is either used directly to encrypt the content in question or a key derived from the referenced key is used to encrypt the content in question. Integrity and/or authenticity of the content being encrypted may be provided by other cryptographic mechanisms.

The content is encrypted using Traffic Encryption Keys (TEKs), in conjunction with a standardised protection protocol (e.g. IPsec, SRTP), before being broadcast. TEKs change frequently (often every minute or less) to prevent an attack based on accessing the TEKs within a device and redistributing the TEKs to unauthorised receivers.

Legitimate subscribers cannot decrypt the broadcast channel without access to the TEKs. TEKs are themselves encrypted using Service Encryption Keys (SEKs). The encrypted TEKs are sent, along with the encrypted content, over the broadcast channel. In terrestrial and satellite digital TV systems these protected TEKs are called Entitlement Control Messages (ECMs). In the OMA BCAST specifications these protected TEKs are called "keystream messages" or Short Term Key Messages (STKMs).

Legitimate subscribers cannot extract the TEK from the keystream messages without access to the relevant Service Encryption Key (SEK). Only legitimate subscribers should have access to the Service Encryption Key.

A service provider will usually assign a separate SEK for each channel they broadcast. If a user subscribes to more than one channel they will require a SEK for each channel to which they subscribe.

Service Encryption Keys (SEKs) can have lifetimes of tens of minutes to months, although by definition they should be significantly longer lived than the TEKs that they protect. By changing the lifetime of a SEK the Service Provider can control the duration of subscription that can be offered to their users (although other mechanisms are possible). In some cases SEKs can have a lifetime equal to that of a single programme, for example a pay per view film or sporting event. In such a case SEKs are often called "Programme Encryption Keys" or PEKs. Some solutions, such as 18Crypt/DRM profile, allow nesting of PEKs and SEKs, e.g. PEKs are encrypted using SEKs.

SEKs are normally sent over a point-to-point channel and are encrypted using another key, referred to herein as a "User Key". The User Key is unique to a particular subscriber and may be the highest level key within the service protection key hierarchy. The DVB-H IPDC 18Crypt profile and OMA BCAST DRM profile specifications use OMA DRM Version 2 Rights Objects (ROs) [OMA DRM] to securely send the SEK to individual terminals. The OMA BCAST Smartcard Profile uses the MIKEY protocol [IETF MIKEY] to securely send the SEK to the user's USIM (via the user's terminal). In both cases these messages are referred to as Long Term Key Messages (LTKMs).

Conventionally, the SEKs, and any keys derived from SEKs to encrypt the TEKs are symmetric keys. This means that the same key is used to encrypt the TEK as is used to decrypt the TEK.

A review of the foregoing conventional service protection issues is given in an article by one of the inventors - "Security consideration for broadcast systems", Information Security Technical Report, Elsevier Advanced Technology, vol. 11, no. 3, 1 January 2006.

Specific suggestions for optimising the delivery of transport services in MBMS are set out in standards discussion document "N to N relationship between User Servies and Transport Services" [3GPP DRAFT: S3-040489_MBMS_USER_TRANSPORT_RELATIONV2, 3RD GENERATION PARTNERSHIP PROJECT (3GPP), 29 June 2004]. This document specifically requires that while two MBMS user services may both use at least one transport service, the service key for that shared transport service should not be used for any other transport service.

The combined use of both asymmetric key encryption and symmetric key encryption is known from "Pretty Good Privacy" which can be found in Wikipedia, eg version of 22.09.2007.

Service Protection platforms must support a STKM generator and an LTKM generator. A number of mobile network operators (MNOs) may for reasons of economy share elements of a Service Protection platform, e.g. the STKM generator. It is less likely that MNOs will share an LTKM generator as this generates messages that are specifically for their customers and typically sent over the cellular network and no the broadcast bearer.

A problem with the MNOs sharing the STKM generator is that the STKM generator needs access to the SEK in order to generate the STKMS (e.g. the TEKs encrypted by the SEKs). However, the SEKs are operator-specific, and are vary valuable keys. Releasing the SEKs to the shared STKM generator in the broadcast platform is a security risk to the MNOs. If the SEK became known to an unauthorised entity, that entity could decrypt the protected broadcast content by using the SEK to extract the TEK from the STKM and then using the extracted TEK to decrypt the protected content.

According to a first aspect of the present invention, there is provided a method of controlling use, as described in claim 1.

The point to point communication between the telecommunications network and the user terminal conveniently sends the private third private key encrypted by a further key.

The broadcasting means may be shared by the telecommunications networks.

Advantageously, the broadcast means may transmit the first key to the encryption means, the encryption means transmitting the encrypted first key to the broadcast means, for onward broadcast to the user terminal.

The user terminal preferably includes authentication means for storing authentication data for authenticating the user terminal with the telecommunications network.

Furthermore, the user terminal may include a secure module for storing the private third key.

Alternatively or additionally, the user terminal may include means for receiving the broadcast encrypted content and the broadcast encrypted first key, and for separating the encrypted content from the encrypted first key.

The user terminal may include an application for accessing the private third key, for receiving the encrypted first key, and for deriving the first key therefrom to enable consumption of the content.

The content is preferably broadcast by at least one of DVH-H and DVB-T.

The telecommunications network- preferably comprises a mobile or cellular telecommunications network, such as GSM, GPRS, UMTS or 4G/SAE/LTE.

The corresponding key may enable the extraction of the first key, which in turn enables the decryption of the broadcast content.

In the embodiment the first key is a Traffic Encryption Key (TEK). The second key and the corresponding key are respective parts of a Service Encryption Key (SEK) public/private key pair (SEK_pub/SEK_priv).

The first key/TEK may be directly encrypted by the second key/SEK_pub or the second key/SEK_pub may be used to derive another key that are used to encrypt the first kevfTEK. If the first key/TEK is encrypted by a key derived from the second key/SEK, then the terminal must perform the corresponding derivation function using the corresponding key/SEK_priv to obtain the key needed to decrypt the TEK.

In the embodiment the first key/TEK, encrypted by the second key/SEK_pub, and data relating to the keys and services that they protect, comprises a Short Term Key Message (STKM). As the STKM is generated by encrypting the first key/TEK with the second key/SEK_pub and combing the SEK encrypted TEK with data relating to the keys and services that they protect, the STKM generator can be shared between a plurality of Service Providers (e.g. Mobile Network Operators) without a significant security risk, in contrast to the prior art. Even if the second key/SEK_pub became known, this would not enable the unauthorised extraction of the first key/TEK from the STKM. The first key/TEK may only be extracted from the STKM by an entity that has the corresponding key/SEK_priv. As the corresponding key/SEK_priv is transmitted by a point to point communication from the Service Provider to the mobile terminal, it is less likely that this will be intercepted. This is especially true in the embodiment where the corresponding key/SEK_priv is sent protected by a User Key (UK) shared between the Service Provider and the user terminal - preferably in a secure module thereof. The UK may be preconfigured on the user terminal at the time of manufacture, on a smartcard for insertion into the user terminal, or generated "on-the-fly" using information pre-provisioned at the time of manufacture.

The embodiment provides significant security improvements by using a public/private key pair for the SEK, in contrast to the symmetric SEKs of the prior art described above. The embodiment allows the broadcasting means and a STKM generator to be shared between a plurality of Service Providers without significantly compromising security. Such an arrangement of shared resources was not possible with the prior art arrangement, without compromising security.

In the embodiment the corresponding key/SEK_priv enables the first key/TEK from the STKM to be decrypted. The secure module on the mobile terminal then is able to use the decrypted first key/TEK required to decrypt the encrypted content received on the broadcast channel and to reproduce that content on the mobile terminal.

In the embodiment security may be further enhanced by securing the corresponding key/SEK_priv in the secure module. The secure module may be implemented by the mobile terminal, for example, or may be implemented on a smartcard such as a Universal Integrated Circuit Card (UICC) that may optionally also implement a Subscriber Identity Module (SIM) or Universal SIM (USIM) or other application. Smartcards are highly secure, tamperproof hardware elements that are trusted by the Mobile Networks Operators. The risk of the corresponding key/SEK_priv being obtained illegitimately from the Smartcard is very small.

According to a second aspect of the present invention, there is provided a system for controlling use, as described in claim 7.

The point to point communication between the telecommunications network and the user terminal may conveniently send the private third key encrypted by a further key.

The broadcasting means may be shared by the telecommunications networks.

The broadcast means may transmit the first key to the encryption means, the encryption means being operable to encrypt the first key using the public second key.

The system may conveniently include the user terminal itself. In this case, the user terminal preferably includes authentication means for storing authentication data for authenticating the user terminal with the telecommunications network.

The user terminal may include a secure module for storing the private third key. The secure module may be implemented in hardware or software.

Alternatively or additionally, the user terminal may include means for receiving the broadcast encrypted content and the broadcast encrypted first key and for separating the encrypted content from the encrypted first key.

The user terminal preferably includes an application for accessing the corresponding key and for receiving the encrypted first key, and for deriving the first key therefrom to enable consumption of the content.

The content may advantageously be broadcast by at least one of DVH-H and DVB-T.

The telecommunications network may comprise a mobile or cellular telecommunications network, such as GSM, GPRS, UMTS or 4G/SAE/LTE.

The telecommunications network may be a GSM, GPRS or UMTS cellular network, for example.

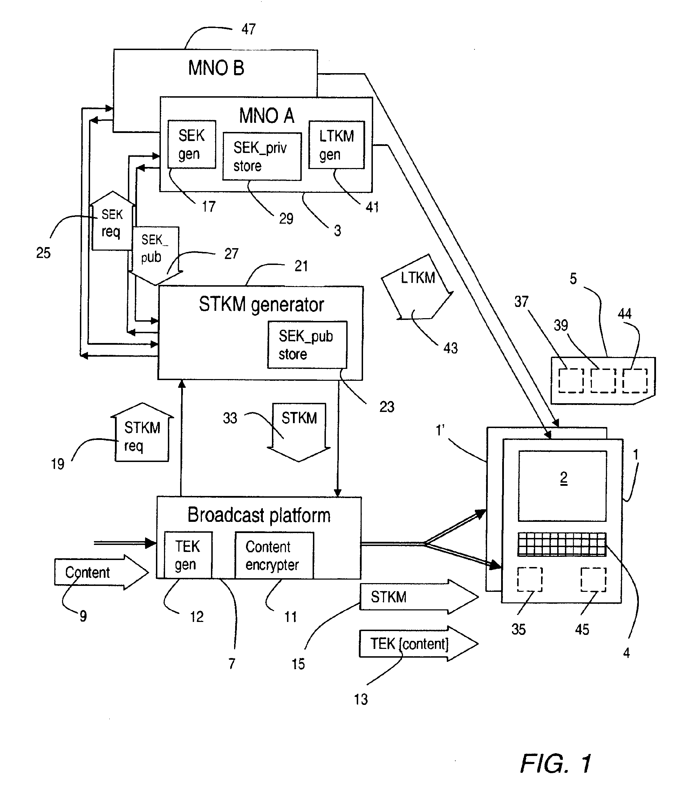

For a better understanding of the present invention an embodiment will now be described by way of example, with reference to the accompanying drawing, the single figure of which shows schematically the elements of a broadcast system in accordance with an embodiment of the invention.

Mobile terminal 1 includes a display 2 and keypad 4. The terminal 1 is registered with a Mobile Network Operator (MNO) 3 (or other service provider) and is provided with secure module 5. The secure module 5 is implemented on a smart card in the embodiment, but this is not essential. Optionally, the smart card may include a Subscriber Identity Module (SIM or USIM), which may allow the MNO 3 to authenticate the user of the terminal 1 using GSM or UMTS authentication. The secure module 5 allows the service provider to securely share a key specific to the user, the "User Key" (UK), with the secure module 5. The User Key may be pre-provisioned at manafacture of the secure module 5 or generated "on-the-fly" using information pre-provisioned at the time of manufacture.

If the secure module 5 comprises a SIM or USIM, or if a SIM/USIM is provided elsewhere for use by the terminal, authentication information may be stored on the SIM/USIM under the control of the MNO 3. The MNO 3 itself stores details of each of the SIM/USIM issued under its control. In operation of MNO 3, the terminal 1 is authenticated (for example, when the user activates the terminal in the network with a view to making or receiving calls) by the network sending a challenge to the terminal 1 incorporating the SIM/USIM in response to which the SIM/USIM calculates a reply (dependent on the SIM/USIM predetermined information held on the authentication means 5 - typically an authentication algorithm and a unique key Ki) and transmits it back to the MNO 3. The MNO 3 includes an authentication processor which generates the challenge and which receives the reply from the terminal 1. Using information pre-stored concerning the content of the relevant SIM/USIM authentication means 5, the authentication processor calculates the expected value of the reply from the mobile terminal 1. If the reply received matches the expected calculated reply, the SIM/USIM and the associated mobile terminal are considered to be authenticated. The SIM/USIM used by the terminal 1 may be a SIM of the type defined in the GSM or UMTS standards specifications, or may be a simulation of a SIM - that is, software or hardware that performs a function corresponding to that of the SIM. The SIM may be in accordance with the arrangement described in WO-A-2004 036513.

The MNO 3 comprises a User Key (UK) generator or store, which is operable to generate or retrieve the User Key for each user. The User Key of the user is stored in the secure module authentication means 5 in store 39.

The terminal 1 is operable to receive broadcast content, such as content broadcast by DVB-H. The broadcast content is also receivable by other terminals, such as terminal 1'. Broadcast platform 7 receives content 9, for example, video, from a content provider (not shown). The broadcast platform 7 comprises a content encrypter 11 which is operable to encrypt the content 9 using a Traffic Encryption Key (TEK) generated by TEK generator 12. The broadcast platform 7 is operable to transmit the encrypted content 13 to the mobile terminal 1. To facilitate decryption of the encrypted content 13 by the mobile terminal 1, the broadcast platform 7 also broadcasts Short Term Key Messages (STKMs) 15 which include the TEKs. The STKM 15 includes the TEK in encrypted form. The TEK is encrypted by a Service Encryption Key (SEK). In accordance with an important feature of the embodiment, the SEK used to encrypt the TEK is the public part of a public/private key pair.

MNO 3 includes an SEK generator 17 that is operable to generate the public and private key pair (SEK_pub and SEK_priv).

When the SEK public and private key pair is generated by SEK generator 17 in MNO 3, in addition to a public key message 27 being sent to a STKM generator 21, the corresponding private key is passed to LTKM generator 41. The LTKM generator 41 generates LTKMs 43 which comprises the private key protected by the User Key (UK) for mobile terminal 1. The LTKM 43 is transmitted by a point-to-point channel. That is, the LTKM 43 is transmitted only to the mobile terminal 1 and is not broadcast to a multiplicity of terminals. For example, the LTKM may be transmitted by SMS, WAP push or by any other convenient mechanism, such as over an IP bearer.

The mobile terminal 1 includes a message processor 37 in the secure module 5 for processing LTKM message 43. On receipt of the LTKM 43 by the mobile terminal 1, the mobile terminal 1 passes the LTKM 43 to the message processor 37. The message processor 37 retrieves the User Key (UK) from the storage location 39. The User Key retrieved from the store 39 of the secure module 5 enables the extraction of the private key (SEK_priv) from the LTKM 43. The private key is then stored in store 44 on the secure module 5.

When the broadcast platform 7 wishes to broadcast an STKM 15, the broadcast platform issues an STKM request 19 to the STKM generator 21. The STKM request 19 includes the TEK from the broadcast platform 7 to be included in the STKM. On receipt of the STKM request 19, the STKM generator 21 determines whether it has an appropriate SEK public key (SEK_pub) stored in public key store 23 in order to generate the STKM. If it is determined that the relevant SEK public key is not present in the public key store 23, the STKM generator 21 issues an SEK request 25 to the MNO 3. The SEK generator 17 of the MNO 3 then generates an SEK public and private key pair in the manner described above. The SEK public key (SEK_pub) generated by the SEK generator 17 or stored in the public key store 23 is transmitted to the STKM generator 21 in message 27. The generated SEK private key (SEK_priv) is stored in private key store 29 in MNO 3. The private key is transmitted to the mobile terminal 1 and stored in store 44 in the manner described above.

On receipt of the message 27, the STKM generator 21 stores the SEK public key in public key store 23. As the STKM generator 21 now has the appropriate public key to generate the STKM in response to the STKM request 19 received from the broadcast platform 7. The STKM generator 21 then retrieves the relevant public key from the public key store 23 and generates the STKM 33, which is transmitted to the broadcast platform 7. The broadcast platform 7 then transmits the STKM 33 to the mobile terminal 1 in STKM 15.

The mobile terminal 1 includes a filter or de-multiplexer 35 which receives data from the broadcast platform 7 and separates out the STKM 15 from the broadcast encrypted content 13.

When the STKM 15 is extracted from the broadcast data received by the mobile terminal 1 by the filter/de-multiplexer 35, the STKM is passed to the message processor 37, which is also operable to process the STKM message 15. The extracted content is passed to content decryption module 45. The message processor 37 retrieves the private key (SEK_priv) from the store 44 and uses this to extract the TEK present in the STKM message 15. Because the private key (SEK_priv) retrieved from the store 44 is the private key corresponding to the public key (SEK_pub) used to protect the TEK, the TEK can be extracted by the message processor 37 using the corresponding private key. The message processor 37 then passes the extracted TEK to the content decryption module 45, which decrypts the encrypted content 13 using the TEK and allows the content to be consumed - for example, it to be displayed on the screen of the mobile terminal 1 and reproduced through the loudspeakers of the mobile terminal 1.

A second MNO 47 shares the broadcast platform 7 and the STKM generator 21 with the first MNO 3. When the STKM generator 21 receives an STKM request 19 from the broadcast platform 7, the STKM request 19 enables the STKM generator 21 to identify for which MNO an STKM has been requested and therefore which SEK public key is required. For example, if the relevant public key is not present in the store 23 and an SEK from the second MNO 47 is required, the STKM generator 21 is operable to obtain from the second MNO 47 an SEK public key by sending an SEK request to second MNO 47, in a similar manner to the sending of the SEK request message 25 to the MNO 3. The second MNO 47 comprises an SEK generator, private key store and LTKM generator which operate in a similar manner to the SEK generator 17, private key store 29 and LTKM generator 41 of the MNO 3. The second MNO 47 establishes User Keys (UKs) for its subscribers and stores these on the secure modules of its subscribers in a similar manner to the first MNO 3. The second MNO 47 also sends LTKM 43, similar to the LTKM 43 sent by the first MNO 3.

The broadcast platform 7 and the STKM generator 21 can be shared by the MNOs 3,47 with little risk of a security compromise because only the SEK public keys of the MNOs 3,47 are provided to the shared STKM generator 21 (for subsequent broadcast by the broadcast platform 7). The corresponding SEK private keys are never provided to the shared STKM generator 21. The SEK private keys are transmitted by a point to point communication in LTKMs 43 by MNO 3 (and the corresponding LTKM for the MNO 47). Further, the LTKM are protected using the relevant User Key (UK) to further enhance security.

Although two MNOs 3,47 are shown in the embodiment, it should be understood that the broadcast platform 7 and STKM generator 21 may be shared by a multiplicity of MNOs.

The scheme used to broadcast the content is DVB-H in the embodiment. However, other broadcasting schemes can be used, such as DVB-T, T-DMB, DAB-IP, ISDB-T, TDtv or Media FLO.

In the embodiment, the content is video (moving pictures and sound). However, it should be understood that the content could be of other types - e.g. sound only, still pictures (slide show), etc.

In the embodiment, the STKM generator 21 and the broadcast platform 7 may be a single unit.

The secure module 5 may be implemented in hardware or software.

## Claims

1. A method of controlling use, by a user terminal (1,1') registered with a telecommunications network (3), of content (13) broadcast by broadcasting means (7) and encrypted by a first key (TEK), the method including:
providing the first key (TEK) to the broadcasting means (7) for broadcast to the user terminal (1,1¹) with the encrypted content (13); and
**characterised by**:
the telecommunications network (3) sharing encryption means (21) with at least one further telecommunications network (47);
the telecommunications network (3) generating a public second key (SEK_pub) and a corresponding different but related private third key (SEK_priv);
the further telecommunications network (47) generating a public fourth key and a corresponding different but related private fifth key;
the encryption means (21), in response to a request for a key message (19), identifying for which of the telecommunications network (3) and the further telecommunications network (47) the key message (19) is requested, and, if the key message (19) is requested for the telecommunications network (3), retrieving the public second key (SEK_pub) and encrypting the first key (TEK) with the public second key (SEK_pub), or a key derived from the public second key (SEK_pub), wherein the encrypted first key (33) is broadcast by the broadcasting means (7) to the user terminal (1,1¹); and
providing the private third key (SEK_priv) corresponding to the public second key (SEK_pub) to the user terminal (1,1¹) by point to point communication between the telecommunications network (3) and the user terminal (1,1¹);
wherein the private third key (SEK_priv) enables extraction of the first key (TEK) for use in decryption of the content (13).

2. The method of claim 1, wherein the point to point communication between the telecommunications network (3) and the user terminal (1,1¹) sends the private third key (SEK_priv) encrypted by a further key.

3. The method of claim 1 or 2, wherein the broadcasting means (7) is shared by the telecommunications networks (3) and the further telecommunications network (47).

4. The method of claim 1, 2 or 3, wherein the broadcasting means (7) transmits the first key (TEK) to the encryption means (21), and wherein the encryption means (21) transmits the encrypted first key (33) to the broadcasting means (7), for onward broadcast to the user terminal (1, 1¹).

5. The method of any one of claims 1 to 4, wherein the user terminal (1, 1¹) includes means for receiving the broadcast encrypted content (13) and the broadcast encrypted first key (15) and for separating the encrypted content (13) from the encrypted first key (15).

6. The method of any one of claims 1 to 5, wherein the user terminal includes an application for accessing the private third key (SEK_priv), for receiving the encrypted first key (15), and for deriving the first key (TEK) therefrom to enable consumption of the content (13).

7. A system for controlling use by a user terminal (1,1¹) of content (13) broadcast by broadcasting means (7) and encrypted by a first key (TEK), the apparatus including:
means (12) operable to provide the first key (TEK) to the broadcasting means for broadcast to the user terminal (1, 1¹) with the encrypted content (13); and
**characterised by**:
a first telecommunications network (3) operable to generate a public second key (SEK_pub) and a corresponding different but related private third key (SEK_priv), the user terminal (1,1¹) being registered with the first telecommunications network (3);
at least one further telecommunications network (47) operable to generate a public fourth key and a corresponding different but related private fifth key;
encryption means (21) shared by the first telecommunications network (3) and the at least one further telecommunications network (47), the encryption means (21) being operable, in response to a request for a key message (19), to identify for which of the telecommunications network (3) and the further telecommunications network (47) the key message (19) is requested, and, if the key message (19) is requested for the first telecommunications network (3), to retrieve the public second key (SEK_pub) and to encrypt the first key (TEK) with the public second key (SEK_pub), or a key derived from the public second key (SEK_pub), wherein the encrypted first key (13) is broadcast by the broadcasting means (7) to the user terminal (1,1¹); and
means operable to provide the private third key (SEK_priv) corresponding to the public second key (SEK_pub) to the user terminal (1, 1¹) by point to point communication between the first telecommunications network (3) and the user terminal (1, 1¹);
wherein the private third key (SEK_priv) enables extraction of the first key (TEK) for use in decryption of the content (13).

8. The system of claim 7, wherein the point to point communication between the telecommunications network (3) and the user terminal (1, 1¹) sends the private third key (SEK_priv) encrypted by a further key.

9. The system of claims 7 or 8, wherein the broadcasting means (7) is shared by the first telecommunications networks (3) and the further telecommunications network (47).

10. The system of claim 7, 8 or 9, wherein the broadcast means (47) transmits the first key (TEK) to the encryption means (21).

11. The system of any one of claims 7 to 10, wherein the user terminal (1, 1¹) includes means for receiving the broadcast encrypted content (13) and the broadcast encrypted first key (15), and for separating the encrypted content (13) from the encrypted first key (15)

12. The system of any one of claims 7 to 11, wherein the user terminal (1, 1¹) includes an application for accessing the private third key (SEK_priv) for receiving the encrypted first key (15), and for deriving the first key (TEK) therefrom to enable consumption of the content (13).

## Patentansprüche

1. Verfahren zum Steuern der Verwendung des Inhalts (13), der von Sendemitteln (7) übertragen und durch einen ersten Schlüssel (TEK) verschlüsselt wird, durch ein Benutzerendgerät (1, 1¹), das bei einem Telekommunikationsnetz (3) registriert ist, wobei das Verfahren Folgendes umfasst:
Bereitstellen des ersten Schlüssels (TEK) für das Sendemittel (7) zur Sendung zum Benutzerendgerät (1, 1¹) mit dem verschlüsselten Inhalt (13) und
**gekennzeichnet durch** Folgendes:
das Telekommunikationsnetz (3) nutzt das Verschlüsselungsmittel (21) mit mindestens einem weiteren Telekommunikationsnetz (47) gemeinsam;
das Telekommunikationsnetz (3) erzeugt einen öffentlichen zweiten Schlüssel (SEK_pub) und einen entsprechenden verschiedenen, jedoch verwandten privaten dritten Schlüssel (SEK_priv);
das weitere Telekommunikationsnetz (47) erzeugt einen öffentlichen vierten Schlüssel und einen entsprechenden verschiedenen, jedoch verwandten privaten fünften Schlüssel;
wobei das Verschlüsselungsmittel (21) als Reaktion auf eine Anfrage nach einer Schlüsselnachricht (19) angibt, ob die Schlüsselnachricht (19) für das Telekommunikationsnetz (3) oder das weitere Telekommunikationsnetz (47) angefordert wird, und wenn die Schlüsselnachricht (19) für das Telekommunikationsnetz (3) angefordert wird, Abrufen des öffentlichen zweiten Schlüssels (SEK_pub) und Verschlüsseln des ersten Schlüssels (TEK) mit dem öffentlichen zweiten Schlüssel (SEK_pub) oder einem Schlüssel, der von dem öffentlichen zweiten Schlüssel (SEK_pub) abgeleitet ist, wobei der verschlüsselte erste Schlüssel (33) **durch** das Sendemittel (7) zu dem Benutzerendgerät (1,1¹) gesendet wird und
Bereitstellen des privaten dritten Schlüssels (SEK_priv), der dem öffentlichen zweiten Schlüssel (SEK_pub) entspricht, für das Benutzerendgerät (1,1¹) **durch** Punkt-zu-Punkt-Kommunikation zwischen dem Telekommunikationsnetz (3) und dem Benutzerendgerät (1,1¹);
wobei die private dritte Schlüssel (SEK_priv) die Extraktion des ersten Schlüssels (TEK) für die Entschlüsselung des Inhalts (13) ermöglicht.

2. Verfahren nach Anspruch 1, wobei durch die Punkt-zu-Punkt-Kommunikation zwischen dem Telekommunikationsnetz (3) und dem Benutzerendgerät (1,1¹) der private dritte Schlüssel (SEK_priv) gesendet wird, der durch einen weiteren Schlüssel verschlüsselt wird.

3. Verfahren nach Anspruch 1 oder 2, wobei das Sendemittel (7) von dem Telekommunikationsnetz (3) und dem weiteren Telekommunikationsnetz (47) gemeinsam genutzt wird.

4. Verfahren nach Anspruch 1, 2 oder 3, wobei das Sendemittel (7) den ersten Schlüssel (TEK) zu dem Verschlüsselungsmittel (21) sendet, und wobei das Verschlüsselungsmittel (21) den verschlüsselten ersten Schlüssel (33) zu dem Sendemittel (7) zum Weitersenden zu dem Benutzerendgerät (1, 1¹) sendet.

5. Verfahren nach einem der Ansprüche 1 bis 4, wobei das Benutzerendgerät (1, 1¹) Folgendes umfasst: Mittel zum Empfangen des gesendeten verschlüsselten Inhalts (13) und des gesendeten verschlüsselten ersten Schlüssels (15) und zum Trennen des verschlüsselten Inhalts (13) von dem verschlüsselten ersten Schlüssel (15).

6. Verfahren nach einem der Ansprüche 1 bis 5, wobei das Benutzerendgerät eine Anwendung für Folgendes umfasst: für den Zugriff auf den privaten dritten Schlüssel (SEK_priv), für den Empfang des verschlüsselten ersten Schlüssels (15) und für die Ableitung des ersten Schlüssels (TEK) daraus, um den Konsum des Inhalts (13) zu ermöglichen.

7. System zum Steuern der Verwendung des Inhalts (13), der von Sendemitteln (7) übertragen und durch einen ersten Schlüssel (TEK) verschlüsselt wird, durch ein Benutzerendgerät (1, 1¹), wobei die Vorrichtung Folgendes umfasst:
Mittel (12), die den ersten Schlüssel (TEK) dem Sendemittel zur Sendung zum Benutzerendgerät (1, 1¹) mit dem verschlüsselten Inhalt (13) bereitstellen können und
**gekennzeichnet durch** Folgendes:
ein erstes Telekommunikationsnetz (3), das einen zweiten öffentlichen Schlüssel (SEK_pub) und einen entsprechenden verschiedenen, jedoch verwandten privaten dritten Schlüssel (SEK_priv) erzeugen kann, wobei das Benutzerendgerät (1,1¹) bei dem ersten Telekommunikationsnetz (3) registriert ist;
mindestens ein weiteres Telekommunikationsnetz (47), das einen öffentlichen vierten Schlüssel und einen entsprechenden verschiedenen, jedoch verwandten privaten fünften Schlüssel, erzeugen kann;
Verschlüsselungsmittel (21), das von dem ersten Telekommunikationsnetz (3) und dem mindestens einen weiteren Telekommunikationsnetz (47) gemeinsam verwendet wird, wobei das Verschlüsselungsmittel (21) als Reaktion auf eine Anfrage nach einer Schlüsselnachricht (19) angeben kann, ob die Schlüsselnachricht (19) für das Telekommunikationsnetz (3) oder das weitere Telekommunikationsnetz (47) angefordert wird, und wenn die Schlüsselnachricht (19) für das erste Telekommunikationsnetz (3) angefordert wird, Abrufen des öffentlichen zweiten Schlüssels (SEK_pub) und Verschlüsseln des ersten Schlüssels (TEK) mit dem öffentlichen zweiten Schlüssel (SEK_pub) oder einem Schlüssel, der von dem öffentlichen zweiten Schlüssel (SEK_pub) abgeleitet ist, wobei der verschlüsselte erste Schlüssel (13) **durch** das Sendemittel (7) zu dem Benutzerendgerät (1, 1¹) gesendet wird und
Mittel, das den privaten dritten Schlüssel (SEK_priv), der dem öffentlichen zweiten Schlüssel (SEK_pub) entspricht, dem Benutzerendgerät (1¹) **durch** Punkt-zu-Punkt-Kommunikation zwischen dem ersten Telekommunikationsnetz (3) und dem Benutzerendgerät (1, 1¹) bereitstellen kann;
wobei die private dritte Schlüssel (SEK_priv) die Extraktion des ersten Schlüssels (TEK) für die Entschlüsselung des Inhalts (13) ermöglicht.

8. System nach Anspruch 7, wobei durch die Punkt-zu-Punkt-Kommunikation zwischen dem Telekommunikationsnetz (3) und dem Benutzerendgerät (1,1¹) der private dritte Schlüssel (SEK_priv) gesendet wird, der durch einen weiteren Schlüssel verschlüsselt wird.

9. System nach Anspruch 7 oder 8, wobei das Sendemittel (7) von dem ersten Telekommunikationsnetz (3) und dem weiteren Telekommunikationsnetz (47) gemeinsam genutzt wird.

10. System nach Anspruch 7, 8 oder 9, wobei das Sendemittel (47) den ersten Schlüssel (TEK) zu dem Verschlüsselungsmittel (21) sendet,

11. System nach einem der Ansprüche 7 bis 10, wobei das Benutzerendgerät (1, 1¹) Folgendes umfasst: Mittel zum Empfangen des gesendeten verschlüsselten Inhalts (13) und des gesendeten verschlüsselten ersten Schlüssels (15) und zum Trennen des verschlüsselten Inhalts (13) von dem verschlüsselten ersten Schlüssel (15).

12. System nach einem der Ansprüche 7 bis 11, wobei das Benutzerendgerät (1,1¹) eine Anwendung für Folgendes umfasst: für den Zugriff auf den privaten dritten Schlüssel (SEK_priv), für den Empfang des verschlüsselten ersten Schlüssels (15) und für die Ableitung des ersten Schlüssels (TEK) daraus, um den Konsum des Inhalts (13) zu ermöglichen.

## Revendications

1. Un procédé de commande de l'utilisation, par un terminal utilisateur (1, 1¹) enregistré auprès d'un réseau de télécommunications (3), d'un contenu (13) radiodiffusé par un moyen de radiodiffusion (7) et chiffré par une première clé (TEK), le procédé comprenant :
la fourniture de la première clé (TEK) au moyen de radiodiffusion (7) pour radiodiffusion vers le terminal utilisateur (1, 1¹) avec le contenu chiffré (13), et
**caractérisé en ce que** :
le réseau de télécommunications (3) partage un moyen de chiffrement (21) avec au moins un autre réseau de télécommunications (47),
le réseau de télécommunications (3) génère une deuxième clé publique (SEK_pub) et une troisième clé privée correspondante différente mais liée (SEK_priv),
l'autre réseau de télécommunications (47) génère une quatrième clé publique et une cinquième clé privée correspondante différente mais liée,
le moyen de chiffrement (21), en réponse à une demande pour un message de clé (19), identifie pour quel réseau parmi le réseau de télécommunications (3) et l'autre réseau de télécommunications (47) le message de clé (19) est demandé, et, si le message de clé (19) est demandé pour le réseau de télécommunications (3), récupère la deuxième clé publique (SEK pub) et chiffre la première clé (TEK) avec la deuxième clé publique (SEK_pub) ou une clé dérivée de la deuxième clé publique (SEK_pub), où la première clé chiffrée (33) est radiodiffusée par le moyen de radiodiffusion (7) au terminal utilisateur (1,1¹), et
la fourniture de la troisième clé privée (SEK_priv) correspondant à la deuxième clé publique (SEK_pub) au terminal utilisateur (1,1¹) par une communication point à point entre le réseau de télécommunications (3) et le terminal utilisateur (1,1¹),
où la troisième clé privée (SEK_priv) permet l'extraction de la première clé (TEK) pour une utilisation dans le déchiffrement du contenu (13).

2. Le procédé selon la Revendication 1, où la communication point à point entre le réseau de télécommunications (3) et le terminal utilisateur (1,1¹) envoie la troisième clé privée (SEK_priv) chiffrée par une autre clé.

3. Le procédé selon la Revendication 1 ou 2, où le moyen de radiodiffusion (7) est partagé par le réseau de télécommunications (3) et l'autre réseau de télécommunications (47).

4. Le procédé selon la Revendication 1, 2 ou 3, où le moyen de radiodiffusion (7) transmet la première clé (TEK) au moyen de chiffrement (21), et où le moyen de chiffrement (21) transmet la première clé chiffrée (33) au moyen de radiodiffusion (7), pour une radiodiffusion vers l'avant vers le terminal utilisateur (1, 1¹).

5. Le procédé selon l'une quelconque des Revendications 1 à 4, où le terminal utilisateur (1, 1¹) comprend un moyen de réception du contenu chiffré radiodiffusé (13) et la première clé chiffrée radiodiffusée (15) et de séparation du contenu chiffré (13) de la première clé chiffrée (15).

6. Le procédé selon l'une quelconque des Revendications 1 à 5, où le terminal utilisateur comprend une application permettant d'accéder à la troisième clé privée (SEK_priv) pour la réception de la première clé chiffrée (15) et pour la dérivation de la première clé (TEK) de celle-ci afin de permettre la consommation du contenu (13).

7. Un système de commande de l'utilisation par un terminal utilisateur (1, 1¹) d'un contenu (13) radiodiffusé par un moyen de radiodiffusion (7) et chiffré par une première clé (TEK), l'appareil comprenant :
un moyen (12) conçu de façon à fournir la première clé (TEK) au moyen de radiodiffusion pour radiodiffusion vers le terminal utilisateur (1, 1¹) avec le contenu chiffré (13), et
**caractérisé par** :
un premier réseau de télécommunications (3) conçu de façon à générer une deuxième clé publique (SEK_pub) et une troisième clé privée correspondante différente mais liée (SEK_priv), le terminal utilisateur (1,1¹) étant enregistré auprès du premier réseau de télécommunications (3),
au moins un autre réseau de télécommunications (47) conçu de façon à générer une quatrième clé publique et une cinquième clé privée correspondante différente mais liée,
un moyen de chiffrement (21) partagé par le premier réseau de télécommunications (3) et le au moins un autre réseau de télécommunications (47), le moyen de chiffrement (21) étant conçu, en réponse à une demande pour un message de clé (19), de façon à identifier pour quel réseau parmi le réseau de télécommunications (3) et l'autre réseau de télécommunications (47) le message de clé (19) est demandé, et, si le message de clé (19) est demandé pour le premier réseau de télécommunications (3), de façon à récupérer la deuxième clé publique (SEK_pub) et à chiffrer la première clé (TEK) avec la deuxième clé publique (SEK_pub) ou une clé dérivée de la deuxième clé publique (SEK_pub), où la première clé chiffrée (13) est radiodiffusée par le moyen de radiodiffusion (7) au terminal utilisateur (1,1¹), et
un moyen conçu de façon à fournir la troisième clé privée (SEK_priv) correspondant à la deuxième clé publique (SEK_pub) au terminal utilisateur (1, 1¹) par une communication point à point entre le premier réseau de télécommunications (3) et le terminal utilisateur (1, 1¹),
où la troisième clé privée (SEK_priv) permet l'extraction de la première clé (TEK) pour une utilisation dans le déchiffrement du contenu (13).

8. Le système selon la Revendication 7, où la communication point à point entre le réseau de télécommunications (3) et le terminal utilisateur (1, 1¹) envoie la troisième clé privée (SEK_priv) chiffrée par une autre clé.

9. Le système selon les Revendications 7 ou 8, où le moyen de radiodiffusion (7) est partagé par le premier réseau de télécommunications (3) et l'autre réseau de télécommunications (47).

10. Le système selon la Revendication 7, 8 ou 9, où le moyen de radiodiffusion (47) transmet la première clé (TEK) au moyen de chiffrement (21).

11. Le système selon l'une quelconque des Revendications 7 à 10, où le terminal utilisateur (1, 1¹) comprend un moyen de réception du contenu chiffré radiodiffusé (13) et de la première clé chiffrée radiodiffusée (15) et de séparation du contenu chiffré (13) de la première clé chiffrée (15).

12. Le système selon l'une quelconque des Revendications 7 à 11, où le terminal utilisateur (1, 1¹) comprend une application permettant d'accéder à la troisième clé privée (SEK_priv) pour la réception de la première clé chiffrée (15) et pour la dérivation de la première clé (TEK) de celle-ci afin de permettre la consommation du contenu (13).
